Europäisches Patentamt

European Patent Office

Office européen des brevets

(11) Veröffentlichungsnummer: **0 374 840**
**A2**

## EUROPÄISCHE PATENTANMELDUNG

(21) Anmeldenummer: 89123467.6

(22) Anmeldetag: 19.12.89

(51) Int. Cl.5 **C03B 33/027, C03B 33/02,**
**C03B 33/04**

(30) Priorität: 19.12.88 DD 323373

(43) Veröffentlichungstag der Anmeldung:
27.06.90 Patentblatt 90/26

(84) Benannte Vertragsstaaten:
**AT BE CH DE FR GB IT LI**

(71) Anmelder: **VEB Flachglaskombinat Torgau**
**Repitzer Weg**
**DDR-7290 Torgau(DD)**

(72) Erfinder: **Knöchelmann, Eckhard, Dipl.-Ing.**
**Amselweg 38**
**DDR-Torgau, 7290(DD)**

(74) Vertreter: **Patentanwälte Zellentin & Partner**
**Zweibrückenstrasse 15**
**D-8000 München 2(DE)**

(54) **Vorrichtung zum Antrieb und zur Führung einer Schneidbrücke.**

(57) Bei dieser Vorrichtung für vorzugsweise numerisch gesteuerte Glastafelschneidmaschinen ist der
Antrieb an der Rückseite der Schneidbrücke (4) mittig und starr angeordnet und besitzt zwei gegenüberliegende, elastisch verformbare Antriebswellen (19,
20). An diesen befinden sich an ihren äußeren Enden Zahnräder (21, 22), die in mit nach unten weisender Verzahnung versehenen Zahnstangen (23,
24) eingreifen. Vor den Zahnrädern (21, 22) sind an
den äußeren Enden der Antriebswellen (19, 20) in
vertikaler Richtung geringfügig bewegliche und federbelastete Lagerungen angebracht.

Fig. 1

### Vorrichtung zum Antrieb und zur Führung einer Schneidbrücke

Die Erfindung betrifft eine Vorrichtung zum Antrieb und zur Führung einer Schneidbrücke bei vorzugsweise numerisch gesteuerten Glastafelschneidmaschinen für Gerad- und Kurvenschnitte mit aus Stellmotor und Getriebe bestehendem Antrieb, Rollen und Rundführungsschienen.

Zum Antrieb und zur Führung der Schneidbrücken bei numerisch gesteuerten Glastafelschneidmaschinen für Gerad- und Kurvenschnitte sind die verschiedensten technischen Lösungen bekannt, die aber insofern mangelhaft sind, weil sie die Forderungen bezüglich hoher Schnittgeschwindigkeit, hoher Dynamik, hoher Schnittgenauigkeit, geringen Verschleißes und geringen konstruktiven Aufwandes sowie geringen Platzbedarfes in optimaler Form nicht erfüllen.

So ist bekannt, Schneidvorrichtungen mit Spindeln und stationären Motoren anzutreiben (DE-OS 26 03 167, DE-OS 35 25 874). Mit diesen Antrieben lassen sich aufgrund der Begrenzung der Spindeldrehzahl und der Spindelsteigung nur relativ geringe Schnittgeschwindigkeiten erzielen. Für den Einsatz in Glastafelschneidmaschinen mit langen Verfahrwegen sind derartige Antriebe ebenfalls nicht geeignet.

Eine andere Möglichkeit nach der DE-OS 26 46 062 ist der Antrieb einer Kreuzschlittenvorrichtung mit Zahnriemen und stationärem Motor. Da mit dieser Vorrichtung die erforderliche Schnittgenauigkeit nicht erreichbar ist, wird gemäß DE-OS 28 50. 127 zusätzlich eine spezielle Programmiervorrichtung benötigt.

Es ist auch bekannt, numerisch gesteuerte Schneidvorrichtungen mit Linearmotoren anzutreiben (DE-PS 34 09 300). Um eine zufriedenstellende Dynamik und Schnittgenauigkeit zu gewährleisten, sind aber spezielle Positionsregelungen und entsprechend angepaßte Linearmotoren erforderlich. In der praktischen Ausführung konnte auf eine zusätzliche Gleichlaufwelle nicht verzichtet werden. Eine spezielle und aufwendige Führungskonstruktion muß für einen sehr konstanten Luftspalt zwischen Läufer und Stator sorgen. Nachteilig wirkt sich auch die hohe Verlustleistung aus, die zur Erwärmung des gesamten Gestelles führt.

Nach der EP 0 126 037 ist eine numerisch gesteuerte Schneidvorrichtung mit hydraulischen Antrieben und elektrohydraulischen Verstärkern versehen. Gegenüber üblichen Kreuzschlittenkonstruktionen ist ein fast doppelter Platzbedarf erforderlich und kommt hinzu, daß sich Glasstaub bzw. Glassplitter nachteilig auf die Dichtheit der hydraulischen Antriebe auswirken. In der praktischen Ausführung werden zum Antrieb numerisch gesteuerter Schneidvorrichtungen aufgrund der bisher beschriebenen Nachteile vorzugsweise Ritzel mit Stellmotoren ohne und mit Getriebe verwendet. In der DE-AS 27 31 230 wird eine Schneidbrücke beschrieben, die mit einem oder zwei Scheibenläufermotoren und Lauf- oder Zahnrädern angetrieben wird, wobei auch damit die bekannten Probleme des Antriebes, des Gleichlaufes und der Genauigkeit nicht zufriedenstellend gelöst werden können. Bekannt ist die Verwendung von paarweisen Zahnstangen und einer Gleichlaufwelle mit Ritzeln zur Erzeugung einer gleichmäßigen Vorschubbewegung der Schneidbrücke. Der Antrieb, meist Motor und Getriebe, ist dabei einseitig außen oder innen am Ende der Schneidbrücke angeordnet und mit der Gleichlaufwelle gekoppelt. Die Befestigung des Antriebes ist überwiegend starr ausgeführt, so daß ein selbsttätiger Spielausgleich zwischen den Ritzeln und den Zahnstangen zur Erhöhung der Schnittgenauigkeit, zur Verringerung der Genauigkeitsanforderungen an die Führung und die Zahnstangen, zur selbsttätigen Kompensation von Verschleiß und zur Vermeidung von Beschädigungen durch z. B. anfallende Glasscherben zwischen Zahnstange und Ritzel nicht möglich ist.

Weiterhin sind aber auch Konstruktionen bekannt, bei denen ein selbsttätiger Spielausgleich erfolgt. Dabei werden jedoch hohe Anforderungen an die Ausführung der Aufhängung gestellt und relativ große Federkräfte benötigt, so daß die Gesamtkonstruktion relativ aufwendig und kompliziert ist.

Bekannt sind auch Ausführungen, bei denen die Übertragung des Antriebsmomentes durch mehrere Zahnriementriebe erfolgt, die auf federbelasteten Schwingen angeordnet sind und eine ebenfalls schwingend befestigte, federbelastete Gleichlaufwelle antreiben. Diese Lösung ist bezüglich Konstruktion und Platzbedarf sehr aufwendig.

Alle angeführten Konstruktionsbeispiele sind mit zwei seitlich und in Höhe der Tischfläche angeordneten Führungen und Zahnstangen mit nach oben zeigender Verzahnung ausgeführt, so daß zusätzlich Schutzmaßnahmen für die Zahnstangen benötigt werden, die aber schließlich allen Anforderungen bezüglich Wartung und Verschleiß nicht genügen können. Es kommt hinzu, daß bei den genannten Konstruktionen die vertikale Verteilung zwischen Führungsmittelpunkt, Kraftangriffspunkt an der Zahnstange und dem Schwerpunkt der Schneidbrücke relativ ungünstig ist, so daß keine optimalen dynamischen Verhältnisse erreicht werden. Da in allen Fällen der relativ schwere Antrieb einseitig am Ende der Schneidbrücke angeordnet ist, ergeben sich durch die ungünstige Masseverteilung zusätzliche dynamische Nachteile.

Der Erfindung liegt die Aufgabe zugrunde, eine Vorrichtung zum Antrieb und zur Führung einer Schneidbrücke für vorzugsweise numerisch gesteuerte Glastafelschneidmaschinen für Gerad- und Kurvenschnitte zu schaffen, wobei der Antrieb aus einem Stellmotor und einem Getriebe besteht, mit der ein selbsttätiger Spielausgleich und damit eine gleichbleibend hohe Schnittgenauigkeit sowie Schnittgeschwindigkeit und ein gutes dynamisches Verhalten erreicht wird, die zuverlässig und verschleißarm arbeitet und eine unkomplizierte und platzsparende Konstruktion aufweist.

Erfindungsgemäß wird die Aufgabe dadurch gelöst, daß ein Antrieb an einer Rückseite einer Schneidbrücke mittig und starr angeordnet ist, der Antrieb zwei gegenüberliegende, durch Biegung elastisch verformbare Antriebswellen besitzt, sich an den äußeren Enden der Antriebswelle je ein Zahnrad befindet, welches in je eine mit nach unten weisender Verzahnung versehene Zahnstange eingreift. Die Zahnstangen und übliche Rundführungsschienen für die Schneidbrücke sind an je einem Führungsträger befestigt, die auf einem Tischgestell einer Glastafelschneidmaschine so montiert sind, daß sie sich seitlich rechts und links oberhalb der Arbeitsfläche des Tisches befinden. Unmittelbar vor den Zahnrädern sind an den äußeren Enden der Antriebswellen in vertikaler Richtung geringfügig bewegliche und federbelastete Lagerungen angebracht, die vorzugsweise je aus einem Pendelkugellager in einem Lagergehäuse bestehen, wobei die Lagergehäuse über Schwenkbolzen in vertikaler Richtung geringfügig beweglich sowie über feste Lagerblöcke an der Schneidbrücke befestigt sind. Unterhalb der Lagergehäuse sind Tellerfederpakete angeordnet, die über Stellschrauben und Kontermuttern einstellbar sind.

Die durch die Erfindung erreichten Vorteile sind im wesentlichen darin zu sehen, daß gleichbleibend hohe Schnittgenauigkeiten sowie Schnittgeschwindigkeiten erreichbar sind, daß die Vorrichtung ein gutes dynamisches Verhalten zeigt, daß sie zuverlässig und verschleißarm arbeitet und eine unkomplizierte und platzsparende Konstruktion aufweist, also der apparative Aufwand gering ist.

Nachfolgend wird die Erfindung anhand eines Ausführungsbeispiels unter Bezug auf Zeichnungen näher erläutert. Es zeigen:

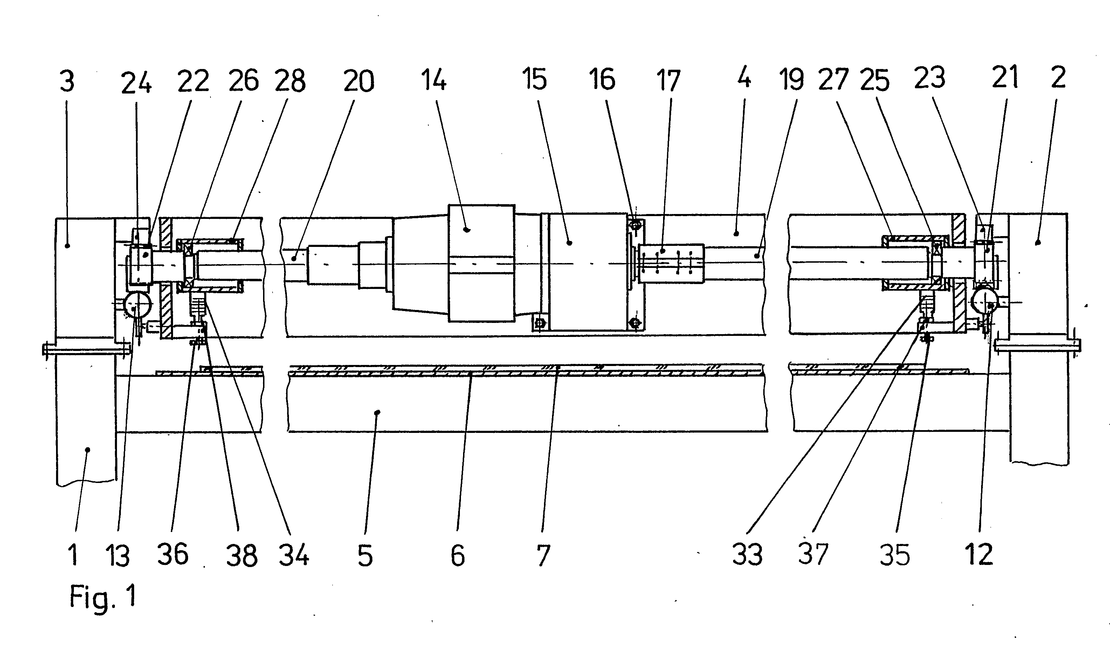

Fig. 1: eine erfindungsgemäße Vorrichtung im teilweisen Schnitt,

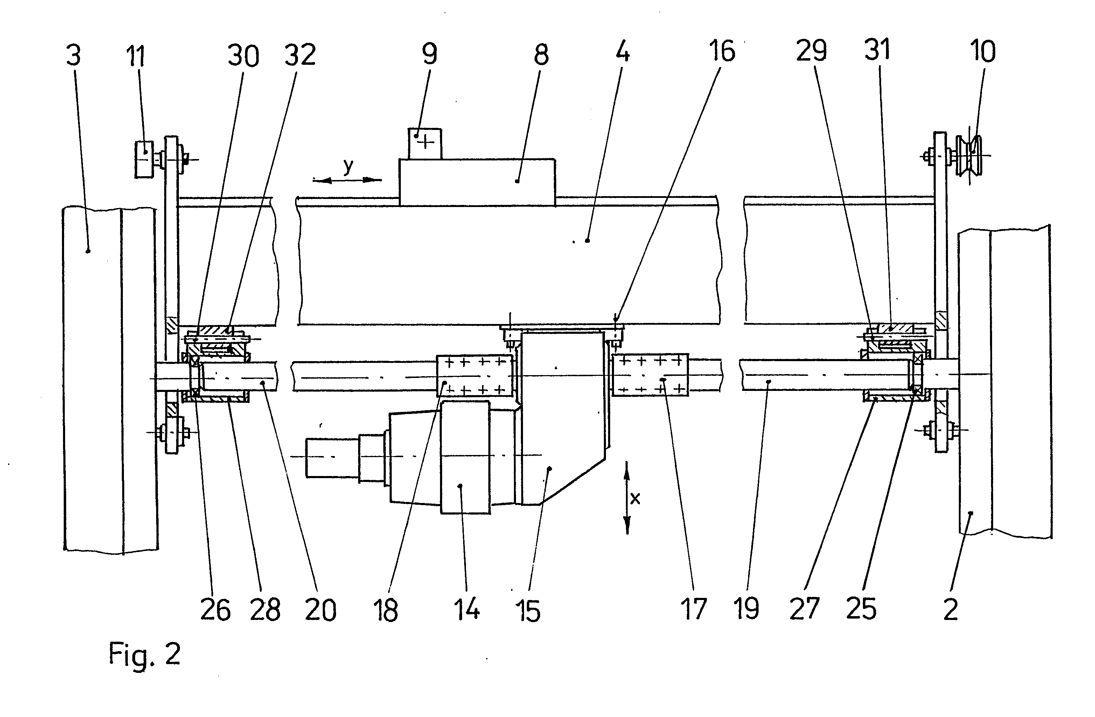

Fig. 2: die Vorrichtung nach Fig. 1 in Draufsicht.

Auf einem Tischgestell 1 einer numerisch gesteuerten Glastafelschneidmaschine sind rechts und links Führungsträger 2 und 3 montiert, zwischen denen eine Schneidbrücke 4 angeordnet ist, die sich oberhalb eines Tisches 5 mit einem Transportband 6 zum Zu- bzw Abführen einer Glastafel 7 befindet. An der Vorderseite der Schneidbrücke 4 ist ein beweglicher Schneidwagen 8 mit einem Schneidkopf 9 angeordnet. Die Schneidbrücke 4 und der Schneidwagen 8 bilden eine übliche XY-Kreuzschlittenanordnung mit der der Schneidkopf 9 in Abhängigkeit von der Vorgabe der numerischen Steuerung Gerad- oder Kurvenschnitte ausführen kann. Die Führung der Schneidbrücke 4 erfolgt in bekannter Weise durch Rollen 10 und 11 auf Rundführungsschienen 12 und 13, die an den Führungsträgern 2 und 3 befestigt sind.

Der aus einem Stellmotor 14 und einem Getriebe 15 bestehende Antrieb der Schneidbrücke 4 ist durch Schrauben 16 starr und mittig an der Rückseite der Schneidbrücke 4 befestigt. Das Getriebe 15 besitzt auf der Abtriebsseite zwei koaxiale Wellenenden, die über starre Schalenkupplungen 17 und 18 mit Antriebswellen 19 und 20 verbunden sind.

An den äußeren Enden der Antriebswellen 19 und 20 sind Zahnräder 21 und 22 angebracht, die in zugehörige und mit nach unten zeigender Verzahnung versehene Zahnstangen 23 und 24 eingreifen. Die Zahnstangen 23 und 24 sind an den Führungsträgern 2 und 3 befestigt. Unmittelbar vor den Zahnrädern 21 und 22 sind auf den Antriebswellen 19 und 20 Pendelkugellager 25 und 26 angeordnet, die sich in Lagergehäusen 27 und 28 befinden. Die Lagergehäuse 27 und 28 sind über Schwenkbolzen 29 und 30 in vertikaler Richtung geringfügig beweglich mit festen Lagerböcken 31 und 32 an der Schneidbrücke 4 befestigt. Unterhalb der Lagergehäuse 27 und 28 befinden sich Tellerfederpakete 33 und 34, die über Stellschrauben 35 und 36 und Kontermuttern 37 und 38 in der Höhe einstellbar sind.

Die Tellerfederpakete 33 und 34 sorgen für eine ständige vertikale Federbelastung der Lagergehäuse 27 und 28 und damit auch der Antriebswellen 19 und 20. Die wirksame Federkraft der Tellerfederpakete 33 und 34 kann über die Stellschrauben 35 und 36 und die Kontermuttern 37 und 38 eingestellt werden.

Die Antriebswellen 19 und 20 sind so dimensioniert, daß sie bei auftretendem Spiel zwischen den Zahnrädern 21 und 22 und den Zahnstangen 23 und 24 durch die Federkraft der Tellerfederpakete 33 und 34 durch Biegung elastisch verformt werden.

Mit der erfindungsgemäßen Vorrichtung wird erreicht, daß die Zahnräder 21 und 22 am Ende der Antriebswellen 19 und 20 ständig unter einer Federvorspannung an den Zahnstangen 23 und 24 anliegen und somit ein selbsttätiger Spielausgleich gewährleistet ist. Die erforderliche Federkraft der Tellerfederpakete 33 und 34 ist relativ gering und setzt sich nur aus dem Betrag zur Verformung der Antriebswellen 19 und 20 und der Radialkomponenten an den Zahnrädern 21 und 22 zusammen. Beispielsweise sind die Antriebswellen 19 und 20 so dimensioniert. daß bei einer Federkraft von 8 kp die Verformung an den äußeren Enden der Antriebswellen 19 und 20 0,3 mm beträgt. Unter Berücksichtigung der Radialkomponenten an den Zahnrädern 21 und 22 ist in diesem Fall eine Federkrafteinstellung an den Tellerfederpaketen 33 und 34 von ca. 28 kp ausreichend.

Diese Werte sind jedoch abhängig von der max. Beschleunigung. der Gesamtmasse der zu bewegenden Bauteile und der Länge der Schneidbrücke 4.

Der Vorteil dieser Anordnung ist darin zu sehen, daß der Antrieb, bestehend aus Stellmotor 14 und Getriebe 15. fest angeordnet ist und trotzdem eine gleichmäßige und spielfreie Übertragung des Antriebsmomentes zu den Zahnstangen 23 und 24 mit geringstem Aufwand und bei hoher Steifheit erreicht wird.

Durch den selbsttätigen Spielausgleich ergibt sich eine Erhöhung der Schnittgenauigkeit und eine selbsttätige Kompensation von eventuellem Verschleiß am Zahnstangenantrieb und den Führungselementen. Gleichzeitig verringern sich die Anforderungen an die Parallelität und die Geradheit der Zahnstangen 23 und 24 und der Rundführungsschienen 12 und 13 in vertikaler Richtung.

Der mittig angeordnete Antrieb bewirkt außerdem eine günstige Masseverteilung und eine gleichmäßige Drehmomentenaufteilung nach links und rechts, so daß ein Beitrag für ein gutes dynamisches Verhalten geleistet und eine gleichmäßige, geringe Belastung der Antriebsund Führungselemente erreicht wird.

Durch die feste Anordnung des Antriebes ist eine aufwendige und bewegliche Antriebsaufhängung nicht erforderlich. Diese erfindungsgemäße Lösung schließt gleichzeitig eine Schwingungsanregung über die Antriebsaufhängung aus und trägt somit zu einem guten dynamischen Verhalten bei. Da durch die Anordnung der Antriebs- und Führungselemente ein minimaler vertikaler Abstand zwischen Führungsmittelpunkt, Kraftangriffspunkt an den Zahnstangen 23 und 24 und dem Schwerpunkt der Schneidbrücke 4 gegeben ist, können optimale dynamische Verhältnisse erreicht werden. Die Anordnung der Rundführungsschienen 12 und 13 und der Zahnstangen 23 und 24 mit nach unten zeigender Verzahnung auf den Führungsträgern 2 und 3 seitlich oberhalb der Tischfläche reduziert wesentlich ihre Verschmutzung. Ein Auftreten von Fremdkörpern, z. B. von Glasscherben, zwischen den Führungselementen und dem Zahnstangenantrieb wird nahezu ausgeschlossen. Daraus ergibt sich ein geringer Verschleiß und ein minimaler Wartungsaufwand Zusätzliche Schutzmaßnahmen für die Zahnstangen 23 und 24 sind nicht erforderlich.

## Ansprüche

1. Vorrichtung zum Antrieb und zur Führung einer Schneidbrücke für vorzugsweise numerisch gesteuerte Glastafelschneidmaschinen mit aus Stellmotor (14) und Getriebe (15) bestehendem Antrieb, Rollen (10, 11) und Rundführungsschienen (12, 13), dadurch gekennzeichnet, daß der Antrieb an der Rückseite der Schneidbrücke (4) mittig und starr angeordnet ist. am Antrieb zwei gegenüberliegende, durch Biegung elastisch verformbare Antriebswellen (19, 20) befestigt sind, sich an den äußeren Enden der Antriebswellen (19, 20) Zahnräder (21, 22) befinden, die in Führungs trägern (2, 3) befestigten Zahnstangen (23, 24) eingreifen, daß unmittelbar vor den Zahnrädern (21, 22) an den äußeren Enden der Antriebswellen (19, 20) in vertikaler Richtung geringfügig bewegliche und federbelastete Lagerungen angebracht sind.

2. Vorrichtung nach Anspruch 1, dadurch gekennzeichnet, daß die federbelasteten Lagerungen aus je einem Pendelkugellager (25, 26) in Lagergehäusen (27, 28) bestehen, die Lagergehäuse (27, 28) über Schwenkbolzen (29, 30) in vertikaler Richtung geringfügig beweglich sowie über feste Lagerböcke (31, 32) an der Schneidbrücke (4) befestigt sind und daß unterhalb der Lagergehäuse (27, 28) über Stellschrauben (35, 36) und Kontermuttern (37, 38) einstellbare Tellerfederpakete (33, 34) angeordnet sind.

3. Vorrichtung nach Anspruch 1 oder 2, dadurch gekennzeichnet, daß die Zahnstangen (23, 24) und die an den Führungsträgern (2, 3) befestigten Rundführungsschienen (12, 13) nach unten weisende Verzahnungen besitzen.

4. Vorrichtung nach einem der Ansprüche 1 bis 3, dadurch gekennzeichnet, daß sich die Führungsträger (2, 3) seitlich rechts und links oberhalb der Arbeitsfläche des Tisches (5) befinden.

EP 0 374 840 A2

Fig. 1

Fig. 2